# EUROPEAN PATENT APPLICATION

(11) **EP 4 603 441 A1**
(43) Date of publication of application: **20.08.2025**
(21) Application number: 25157507.2
(22) Date of filing: 12.02.2025
(51) Int. Cl.: B66F 9/075, B60Q 1/50, B66F 17/00

(54) **SYSTEMS AND METHODS FOR PROJECTIONS FROM A MATERIAL HANDLING VEHICLE**

(30) Priority: 13.02.2024 US 202463552931 P
(71) Applicant: The Raymond Corporation, Greene, NY 13778 (US)
(72) Inventor: Goncalves, Fernando D., Vestal, NY 13850 (US); Kerila, Robert J., Endwell, NY 13760 (US)
(74) Representative: Zacco Sweden AB

(57) **Abstract**

A projection system (300) for a material handling vehicle (306) can include a real-time location system tag, a projector (310, 604), and a control unit (608). The RTLS system can detect a location of the material handling vehicle (306). The projector (310, 604) can be coupled to a motorized projector mount (606) configured to project a projection image (304, 610) on a surface (312). The control unit (608) can receive system information including: the location and speed of the material handling vehicle (306), a set of rules specific to a facility (410) where the material handling vehicle (306) is operating, and a location of one or more other assets in the facility (410). The control unit (608) can determine if a projection image (304, 610) is required using the received system information and select a projection image (304, 610), if required, based on the received system information. The control unit (608) can also determine a location to project the projection image (304, 610) and move the motorized mount (606) to move the projector (310, 604) to a position corresponding to the determined projection image (304, 610) location.

## Description

### CROSS-REFERENCE TO RELATED APPLICATIONS

This application claims the benefit of U.S. Provisional Patent Application No. 63/552,931, filed February 13, 2024, which is hereby incorporated by reference in its entirety.

### BACKGROUND

Material handling vehicles can be found in warehouses, factories, shipping yards, and, generally, wherever pallets, large packages, or loads of goods are transported from place to place. Material handling vehicles typically include a mast with one or more load supporting members or forks for lifting packages or pallets. Material handling vehicles may be designed to include one or more sensors and/or cameras to assist in loading packages or pallets.

### BRIEF SUMMARY

In some aspects, the present disclosure provides a projection system for a material handling vehicle. The projection system includes a location system, a projector, and a control unit. The location system is configured to detect a location of the material handling vehicle using a location tag. The projector is coupled to a projector mount. The projector is configured to produce a projection image on a surface. The control unit is configured to receive system information. The system information includes: a position of the material handling vehicle, a speed of the material handling vehicle, and a set of rules specific to a facility where the material handling vehicle is operating. The control unit is further configured to determine if a projection image is required using the received system information. The projection image is selected from a plurality of projection images, if the projected image is required, based on the received system information. The projection image is projected on the surface. An advantage of the projection system includes easy detection of information by an operator, pedestrian, vehicle, etc. for operating within a facility. Thus, the projection system improves the overall efficiency in a facility where the material handling vehicle with this projection system operates. Moreover, the system information can provide for a determination of whether the projection image is required, as well as select ae correct projection image to beprojected.

In some aspects, the present disclosure provides a method of projecting an image from a material handling vehicle. The method includes receiving system information. The system information includes: a position of the material handling vehicle, a speed of the material handling vehicle, and a set of rules specific to a facility where the material handling vehicle is operating. The system information is used to determine if a projection image is required. If the projection image is required, the projection image is selected from a plurality of projection images based on the received system information. The projection image is projected on a surface using a projector coupled to a projector mount on the material handling vehicle. The advantages of the method are similar to those described above with respect to the projection system.

These and still other advantages of the invention will be apparent from the detailed description and drawings. What follows is merely a description of some preferred embodiments of the present invention. To assess the full scope of the invention, the claims should be looked to as these preferred embodiments are not intended to be the only embodiments within the scope of the claims.

### BRIEF DESCRIPTION OF THE DRAWINGS

The invention will be better understood and features, aspects, and advantages other than those set forth above will become apparent when consideration is given to the following detailed description thereof. Such detailed description makes reference to the following drawings.
FIGS. 1 and 2 show examples of projected illuminations on warehouse floors according to prior art.
FIG. 3 shows a vehicle projecting a pedestrian crosswalk, according to aspects of the present disclosure.
FIG. 4 shows a projection system using vehicle location information to project right-of-way for vehicles operating close to one another, according to aspects of the present disclosure.
FIG. 5 shows the projection system being used to provide turn-by-turn directions to operators, according to aspects of the present disclosure.
FIG. 6 shows an exemplary construction of the projection system on the vehicle, according to aspects of the present disclosure.
FIG. 7 shows an example of a motorized mount that can be used to change the relative position between the projected image and the vehicle, according to aspects of the present disclosure.
FIG. 8 shows a high-level flow diagram of an example of system operation, according to aspects of the present disclosure.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also as used herein, unless otherwise specified or limited, directional terms are presented only with regard to the particular embodiment and perspective described. For example, reference to features or directions as "horizontal," "vertical," "front," "rear," "left," "right," and are generally made with reference to a particular figure or example and are not necessarily indicative of an absolute orientation or direction. However, relative directional terms for a particular embodiment may generally apply to alternative orientations of that embodiment. For example, "front" and "rear" directions or features (or "right" and "left" directions or features, and so on) may be generally understood to indicate relatively opposite directions or features.

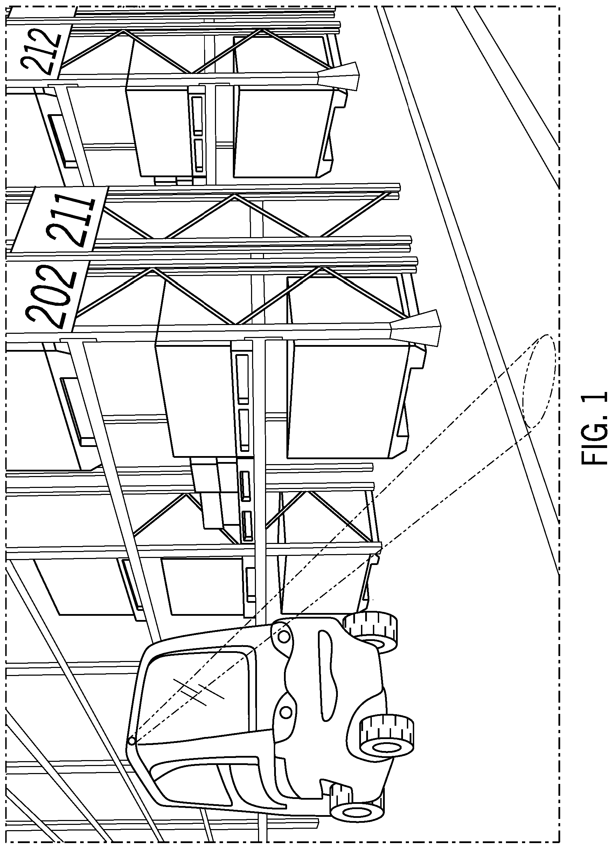

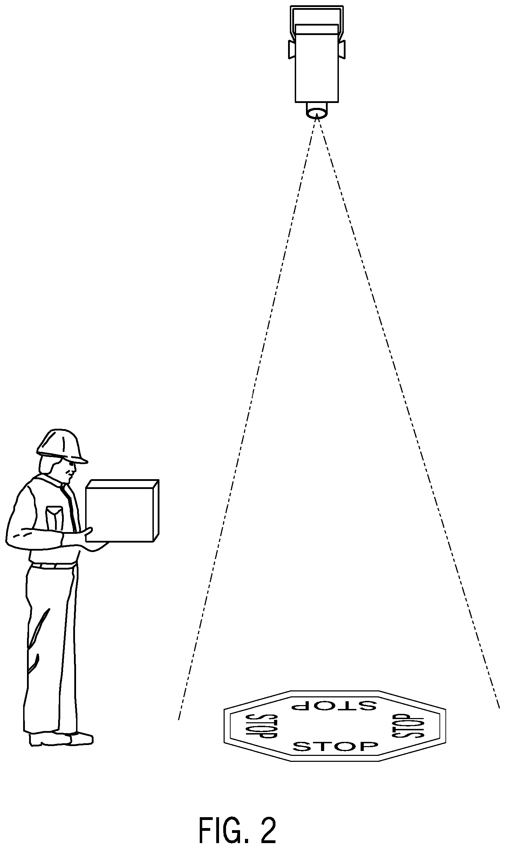

The reference numerals in the following description have been organized to aid the reader in quickly identifying the drawings where various components are first shown. In particular, the drawing in which an element first appears is typically indicated by the left-most digit(s) in the corresponding reference number. For example, an element identified by a "100" series reference numeral will likely first appear in FIG. 1, an element identified by a "200" series reference numeral will likely first appear in FIG. 2, and so on.

It is also to be appreciated that material handling vehicles are designed in a variety of classes and configurations to perform a variety of tasks. It will be apparent to those of skill in the art that the present disclosure is not limited to any specific material handling vehicle, and can also be provided with various other types of material handling vehicle classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the present disclosure is not limited to material handling vehicles applications. Rather, the present disclosure may be provided for other types of vehicles, such as automobiles, buses, trains, tractor-trailers, farm vehicles, factory vehicles, and the like.

The invention will now be described more specifically with reference to the following embodiments. It is to be noted that the following embodiments are presented herein for purpose of illustration and description only. It is not intended to be exhaustive or to be limited to the precise form disclosed.

As should be noted, for certain types of vehicles there are training requirements imposed by various government agencies, laws, rules and regulations. For example, OSHA imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires, among other things, proper operational practices including, among other things, that an operator remain in control of the material handling vehicle, pay attention to the operating environment, and always look in the direction of travel.

A projection system may provide systems and methods for indicating a location of a material handling vehicle. A vehicle mounted projection system can indicate a position of a vehicle to other vehicles and pedestrians within its vicinity. Conventional vehicle mounted projection systems project a single image or dot on the floor at a fixed distance from the vehicle. Moreover, these systems do not leverage information coming from the vehicle, such as the speed of the vehicle or the vehicle's position within the warehouse or facility. As such, the projected image or dot may be projected behind the vehicle (away from direction of travel), which may confuse observers. For example, FIG. 1 illustrates a forklift projecting an illumination on the floor. In other known configurations, a static projection system may be used. A static projection system can include a projector that is mounted within a warehouse, rather than on a vehicle. For example, FIG. 2 illustrates an example of a ceiling mounted projector, projecting an illumination on the floor. Additionally, prior methods do not take into account other vehicles or pedestrians that are proximate to the subject vehicle.

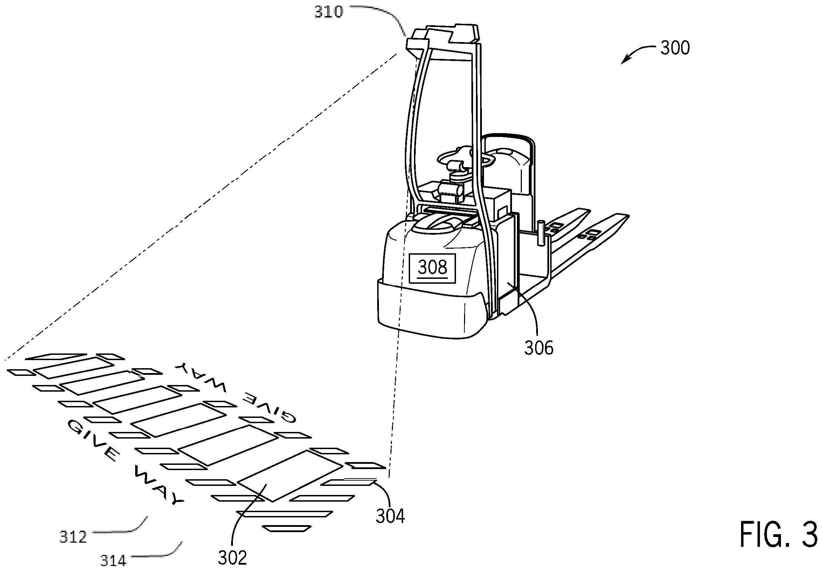

Referring to FIG. 3, examples of the disclosed technology may provide a vehicle mounted projection system 300 that can address the various items noted above, as well as others. Some configurations of the disclosed vehicle mounted projection system can include a projector 310 that can be used to project a boundary projection image 304 of a "SLOW" or "STOP" zone based on a vehicle's position obtained by a location system using a location tag. In some examples, the location system may be a real-time location system (RTLS) that uses a RTLS tag to detect the location of the vehicle. These boundary projections 304 can provide awareness to the vehicle's operator when they are approaching a zone, which may signal for them to slow down or stop the material handling vehicle 306. In another example, the vehicle mounted projection system 300 may be used with an automated vehicle. The vehicle mounted projection system 300 can project a crosswalk symbol 302 or other image on a surface 312 (e.g., a floor 314 and/or a wall), as shown in FIG. 3, which can notify surrounding pedestrians that the vehicle 306 is aware of their presence and that the vehicle 306 is yielding to allow the pedestrians to cross. In this example, the projection system can be used to demonstrate movement or no movement of the material handling vehicle 306 and does not eliminate or preclude the use of any of the sensors 308 on the automated vehicle used for object detection. In some examples, the sensors 308 may include one or more LiDAR sensors, cameras, ultrasonic sensors, infrared (IR) sensors, or the like. It may be particularly advantageous to project the projection image on a surface being a floor, as the operator performing an order picking operation may have their attention drawn to lower pallets and goods. Thus, the projection on the floor emitted from the material handling vehicle will improve the efficiency of the work for the operator.

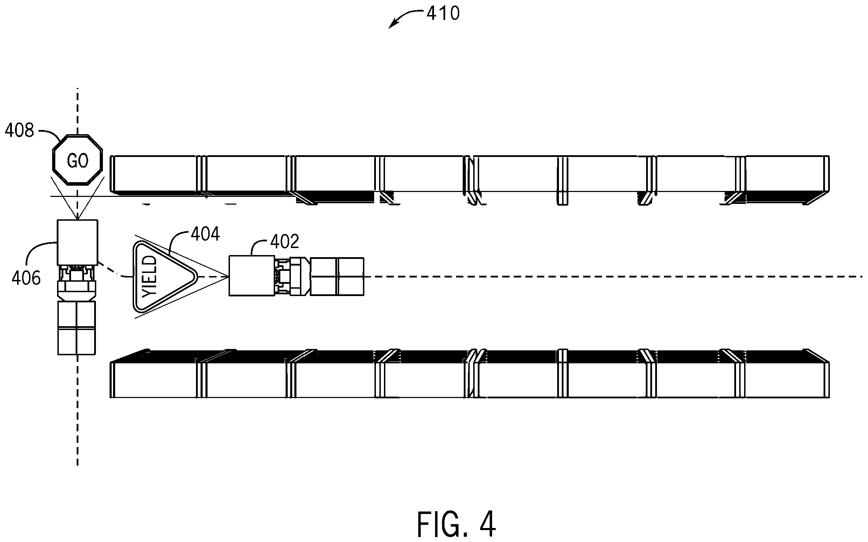

In some embodiments, two manned vehicles 402, 406 with the disclosed vehicle mounted projection system 300 may be working in proximity to one another (e.g., in the same warehouse). As illustrated in FIG. 4, the projection system of the first manned vehicle 402 may project yellow YIELD sign 404 and the projection system of the second manned vehicle 406 may project a green GO sign 408, based on rules of a facility 410 or warehouse. For example, the rules of the facility 410 may require an operator of a manned vehicle to stop, look both ways, honk a horn of the vehicle, etc. when an interaction is detected with another vehicle and/or a pedestrian. In some examples, a STOP sign may also be projected. The GO sign may be advantages because it may help to avoid unnecessary congestion in a busy facility, where several assets or vehicles are operating.

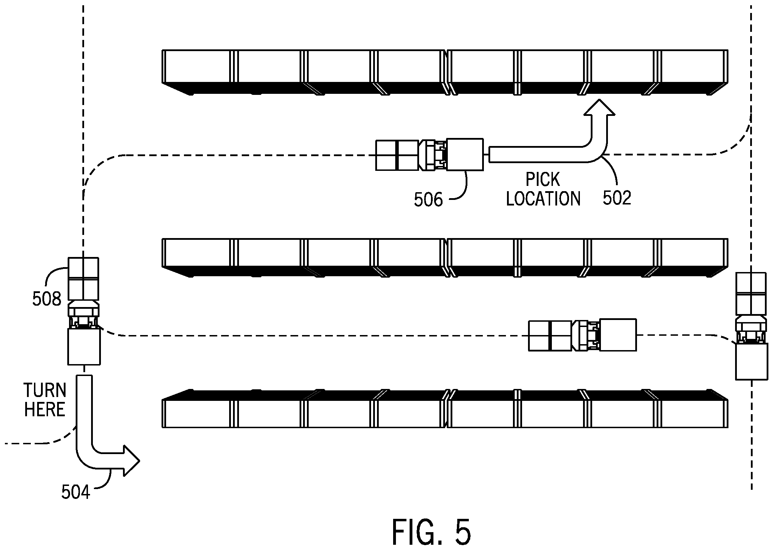

In another example, the vehicle mounted projection system 300 can provide turn-by-turn instruction projections 502, 504 to the operator of a manned vehicle 506, 508, as shown in FIG. 5. These instruction projections can assist the operator in navigating to various destinations, such as picking area, receiving area, storage locations, shipping bays, etc. In some examples, the destination may manually be set by the operator. In other examples, the vehicle mounted projection system may automatically receive or determine a destination based on the facility rules, a connected warehouse management system (WMS), or other determination factors. The projections associated with turn-by-turn instructions can also include a placement of a pallet (e.g., a location labeled "Place Pallet Here"). In another example, the vehicle mounted projection system 300 may project training guidance. For example, a projection image may project words associated with reinforcing desired behaviors, such as "LOOK BOTH WAYS" or "LOWER FORKS BEFORE TRAVELING."

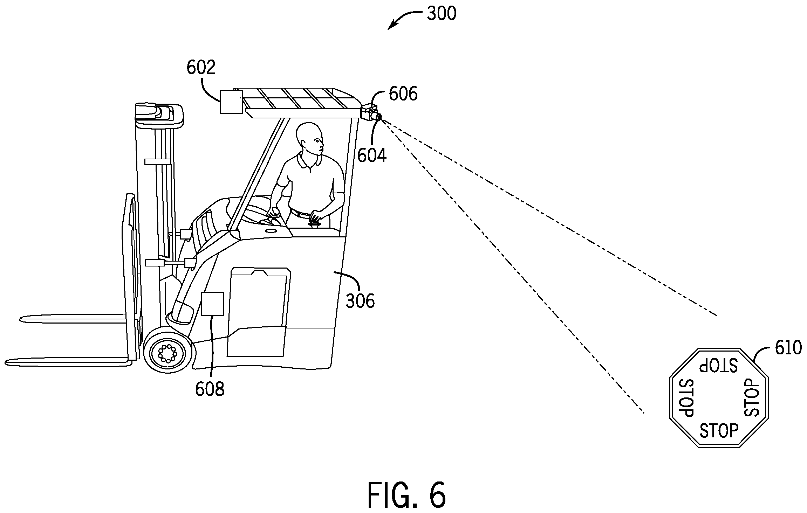

FIG. 6 shows an example of the general construction of the vehicle mounted projection system 300. The vehicle mounted projection system 300 can include a location sensing device (e.g., an RTLS tag) 602, a projector 604 attached to a projector mount 606, a control unit 608, and a projection image 610.

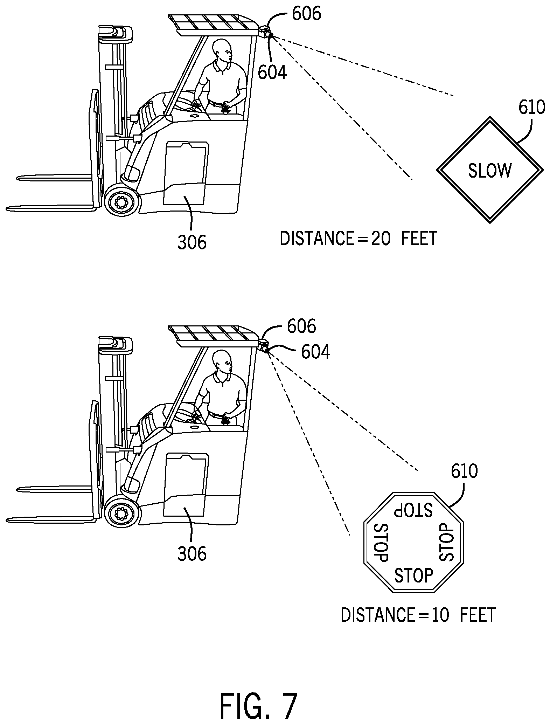

The vehicle mounted projection system 300 can be dynamic and can allow the projection image 610 (e.g., STOP sign 610) to change based on the situation of the subject vehicle. As illustrated in FIG. 7, a projection location associated with the projection image 610 may not remain at a fixed distance from the material handling vehicle 306 and can be moved using a motorized projector mount 606, based on for example, the vehicle's speed and position. In some examples, the motorized projector mount 606 may be manually moved by a vehicle operator using one or more controls. In other examples, the control unit 608 of the vehicle mounted projection system 300 may automatically determine and move the motorized projector mount 606 to an appropriate position based on what information is to be projected in the projected image 610. By using system information to determine the projection location, improved efficiency may be achieved. For example, a material handling vehicle that is turning may use a projection location facing a direction of the turn, such that the view of the operator aligns with the projection location of the projection image 610. In some examples, the projector mount 606 may be a motorized projector mount. The vehicle mounted projection system 300 can communicate information to both the operator and other assets that may be operating close to the subject material handling vehicle 306. A motorized projector mount 606 may be advantageous in providing the dynamic projection image 610. Moreover, the motorized mount 606 may alter the position of the projection image 610 on the surface. The motorized mount 606 may further be used for moving the projector 604 to a position where cleaning of the projector is facilitated. Moreover, the motorized mount 606 may provide illumination for the operator in obscure locations in the facility or on the vehicle itself.

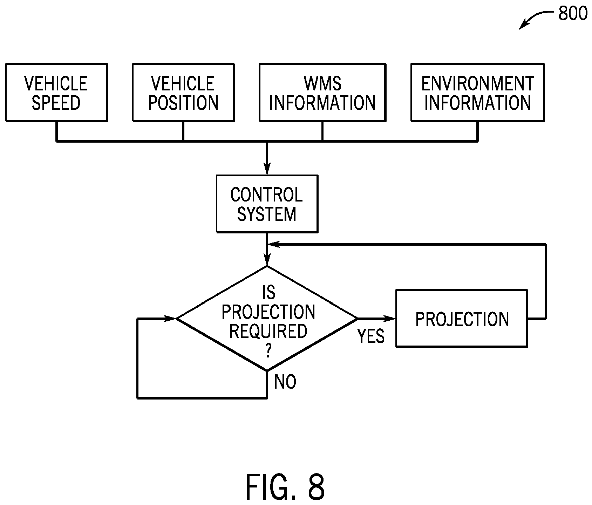

FIG. 8 illustrates an exemplary control method 800 of the vehicle mounted projection system 300. The control method can utilize system information about the material handling vehicle 306 such as the position of the vehicle, the vehicle's speed, WMS information, and any environment information to make a determination on what should be projected on a surface. In some examples, a projection image may be selected from a plurality of projection images, such as an image library. The control method 800 can also use the system information to calculate how far from the material handling vehicle 306 the projection image 610 should appear. The WMS information may include the aisle and bay location of the vehicle or the vehicle operator's next destination. For example, the aisle and bay location may specify a location, section, or area within a warehouse. The environment information may include a mapping of the various WMS pick locations, such as coordinates that correspond to physical locations throughout a warehouse. The environment information may also include specific travel rules based on the location of the vehicle. For example, the travel rules may change when the vehicle is traveling in an area defined as a pedestrian zone, lift restricted area, speed restricted area, etc. Other system information provided to the control system may include the location of other assets surrounding the subject vehicle (e.g., other material handling vehicles, vehicles, pedestrians, operators of other vehicles, etc.). Moreover, the environment information may provide the control method 800 with specific facility rules regarding the right-of-way of vehicles and pedestrians. In some examples, the environment information may include a mapping of the WMS pick locations to physical x, y locations in the warehouse. By including location information in the system information of other assets surrounding the subject vehicle, the projected image may be adapted based on the surrounding asset. For example, adapting the projected image may allow a second material handling vehicle that is approaching to see the projected image earlier. The projection image may, for example, be projected in a direction towards the direction of the approaching second material handling vehicle. The asset information may also comprise location information of operators or pedestrians, for example by carried location tags. The projected image may then be adapted to the operators and/or pedestrians, and, for example, may follow their current path of movement etc. The received WMS information by the control unit 608 may then be included in the system information, and thus the projected image may be adapted in a considerable way for the next step in the movement of the material handling vehicle in for example an order picking operation.

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

It is expressly contemplated that any of the processes or steps described herein may be combined, eliminated, or reordered. In other embodiments, instructions may reside in computer readable medium wherein those instructions are executed by a processor to perform one or more of processes or steps described herein. As such, it is expressly contemplated that any of the processes or steps described herein can be implemented as hardware, firmware, software, including program instructions executing on a computer, or any combination of thereof. Accordingly, this description is meant to be taken only by way of example, and not to otherwise limit the scope of this invention.

## Claims

1. A projection system (300) for a material handling vehicle (306), the projection system comprising:
a location system, the location system configured to detect a location of the material handling vehicle using a location tag;
a projector (310) coupled to a projector mount (606), the projector (604) configured to project a projection image on a surface (312);
a control unit (608), the control unit (608) configured to receive system information, wherein the system information comprises: a position of the material handling vehicle (306), a speed of the material handling vehicle (306), and a set of rules specific to a facility (410) where the material handling vehicle (306) is operating, and wherein the control unit (608) is further configured to:
determine if the projection image (610) is required using the received system information;
select the projection image (610) from a plurality of projection images, if the projection image (610) is required, based on the
received system information; and
project the projection image (610) on the surface (312).

2. The projection system (300) of claim 1, wherein the projector mount is a motorized projector mount (606).

3. The projection system (300) of claim 1 or 2, wherein the surface (312) is a floor (314) in the facility (410).

4. The projection system of any of the claims above, wherein the system information further comprises a location of one or more other assets operating in the facility (410).

5. The projection system of any of the claims above, wherein the control unit is further configured to determine a projection location to project the projection image.

6. The projection system of claim 5, wherein the control unit (608) is further configured to move the projector mount (606) to move the projector (604) to a position corresponding to the determined projection location.

7. The projection system of any of the claims above, wherein the control unit (608) is further configured to receive warehouse management system (WMS) information, the WMS information comprises a plurality of bay and aisle locations within the facility (410).

8. The projection system of any of the claims above, wherein the projection image comprises at least one of: a STOP sign (610), a yield sign (404), a GO sign (408), turn-by-turn instructions (502, 504), and a crosswalk symbol (302).

9. A method for projecting an image from a material handling vehicle (306), the method comprising:
receiving system information, wherein the system information comprises: a position of the material handling vehicle (306), a speed of the material handling vehicle (306), and a set of rules specific to a facility (410) where the material handling vehicle (306) is operating;
determining if a projection image (610) is required using the system information;
selecting the projection image (610) from a plurality of projection images, if the projection image (610) is required, based on the system information; and
projecting the projection image (610) on a surface using a projector (604) coupled to a projector mount (606) on the material handling vehicle (306).

10. The method of claim 9, further comprising:
adjusting a distance of the projection image (610) from the material handling vehicle (306) to the projector mount (606),
wherein the projector mount (606) is a motorized projector mount (606).

11. The method of claim 9 or 10, wherein the surface (312) is a floor (314).

12. The method of any of the claims 9 to 11, further comprising receiving a location of one or more other assets operating in the facility.

13. The method of any of the claims 9 to 12, further comprising determining a projection location to project the projection image (610).

14. The method of claim 13, further comprising moving the projector mount (606) to move the projector (604) to a position corresponding to the determined projection location.

15. The method of any of the claims claim 9 to 14, further comprising receiving warehouse management system (WMS) information, wherein the WMS information comprises a plurality of bay and aisle locations within the facility (410).
